(19) Europäisches Patentamt / European Patent Office / Office européen des brevets

(11) **EP 3 393 065 B1**

(12) **EUROPEAN PATENT SPECIFICATION**

(45) Date of publication and mention of the grant of the patent:
**06.11.2019 Bulletin 2019/45**

(51) Int Cl.:
*H04L 1/00* *(2006.01)*    *H04B 7/0417* *(2017.01)*
*H04J 11/00* *(2006.01)*    *H04B 7/06* *(2006.01)*
*H04L 1/06* *(2006.01)*

(21) Application number: **16891515.5**

(22) Date of filing: **26.02.2016**

(86) International application number:
**PCT/JP2016/055821**

(87) International publication number:
**WO 2017/145358 (31.08.2017 Gazette 2017/35)**

(54) **WIRELESS COMMUNICATION APPARATUS AND NUMBER-OF-TRANSMISSION-STREAMS DETERMINATION METHOD**

DRAHTLOSKOMMUNIKATIONSVORRICHTUNG UND VERFAHREN ZUR BESTIMMUNG DER ANZAHL VON ÜBERTRAGUNGSSTRÖMEN

APPAREIL DE COMMUNICATION SANS FIL ET PROCÉDÉ DE DÉTERMINATION DE NOMBRE DE FLUX DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018 Bulletin 2018/43**

(73) Proprietor: **Mitsubishi Electric Corporation Chiyoda-ku Tokyo 100-8310 (JP)**

(72) Inventors:
• **UCHIDA, Shigeru**
  **Tokyo 100-8310 (JP)**
• **TAIRA, Akinori**
  **Tokyo 100-8310 (JP)**
• **NISHIMOTO, Hiroshi**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
**EP-A1- 1 998 484        EP-A1- 2 056 506**
**EP-A2- 2 375 584        JP-A- 2007 005 841**
**JP-A- 2008 521 353        JP-A- 2013 012 831**
**US-A1- 2007 160 162**

**Description**

Technical Field

The present invention relates to a wireless communication device configured to transmit a single stream or a plurality of streams to each of a plurality of counterpart wireless communication devices to be targets and a number-of-transmission-streams determination method to be executed by the wireless communication device.

Background Art

In order to achieve the transmission of a large amount of data at a limited frequency, development of a multi-input multi-output (MIMO) system for performing spatial multiplexing transmission through use of a plurality of transmission/reception antennas is in progress. For further improvement in frequency utilization efficiency, the number of spatially multiplexed streams is expected to continue to increase.

As a method of increasing the number of spatially multiplexed streams, so-called multi-user MIMO (MU-MIMO), which is a method of performing spatial multiplexing between user terminals, is being considered, and standardization of MU-MIMO technology is also under way in Third Generation Partnership Project (3GPP).

In the MU-MIMO technology, it is recognized as a major challenge to inhibit interference (inter-user interference (IUI)) from occurring between transmission signals to respective users. In next-generation mobile communications, it is assumed that the maximum number of spatially multiplexed streams for users is expanded, and hence this challenge becomes particularly noticeable.

As representative precoding for achieving an MU-MIMO downlink, a block diagonalization (BD) method is being widely investigated (see, for example, Non-patent Literatures 1 and 2).

The BD method is a precoding method for directing a null to a point other than a desired user, to thereby form a beam space so that a signal is transmitted only to the desired user. Through execution of this operation on all users, it is possible to achieve an MU-MIMO environment in which no IUI occurs. As a result, it is possible to simplify a receiver configuration on a terminal.

However, in the BD method, the degree of freedom of a base station transmission array is consumed for null steering, and hence a transmission beam for improving a received signal-to-noise power ratio (SNR) of each user is not always formed depending on a calculated transmission weight. As a result, particularly in a multi-user environment, the degree of freedom of an array is greatly lost due to the null steering performed for a plurality of users, which leads to a problem that a surplus transmission diversity gain cannot be obtained. As a method of solving such a problem, there is proposed a method described in, for example, Non-patent Literature 3.

There is also disclosed a technology in which a base station device for performing multi-user MIMO scheme communications to/from a plurality of user terminals eliminates inter-user interference between the respective user terminals through use of a block triangulation method and a dirty paper coding (DPC) transmission scheme (see, for example, Patent Literature 1).

In addition, there is disclosed a technology for performing precoding for triangulating the channel matrix of the entire system while a maximum beam is secured for one user and eliminating in advance inter-user interference occurring in a reception device (see, for example, Patent Literature 2).

There is further disclosed in EP2375584 a system determining a degree of diversity based on the number of transmitted data streams and the number of receiving antennas. A data stream rate is selected based on an SNR estimated value and the degree of diversity.

Citation List

Patent Literature

[PTL 1] JP 2012-257194 A
[PTL 2] JP 2011-199831 A

Non-patent Literature

[NPL 1] M. Rim, "Multi-user downlink beamforming with multiple transmit and receive antennas," Electron. Lett., vol.

38, no. 25, pp. 1725-1726, Dec. 2002.

[NPL 2] L.U. Choi and R.D. Murch, "A transmit preprocessing technique for multiuser MIMO systems using a decomposition approach," IEEE Trans. Wireless Commun., vol. 3, no. 1, pp. 20-24, Jan. 2004.

[NPL 3] Nishimoto, Hira, Okazaki, and Okamura, "Block Multiplexing Diagonalization Method in Multi-user MIMO Downlink", IEICE Technical Report, RCS 2015-101, July 2015.

Summary of Invention

Technical Problem

In the related art described in Non-patent Literature 3, there is proposed a block multiplex diagonalization method as a precoding scheme for a transmission device. However, it is required to perform processing for eliminating inter-user-signal interference on a receiving terminal, which raises a fear that satisfactory transmission performance cannot be obtained under a condition for simplifying a receiver configuration.

Further, in the related arts described in Patent Literatures 1 and 2, as a precoding scheme for a transmission device, DPC being a non-linear precoding scheme is employed in addition to the block triangulation method. However, there is a problem that, in the course of the addition of a canceling signal for another stream signal, transmission power may greatly increase depending on the state of the transmission line. In view of this problem, a scheme for suppressing an increase in transmission power by Tomlinson-Harashima precoding (THP) or other such scheme is generally considered. However, it is required to perform processing corresponding to a modulo operation on the reception side, and there is a problem of, for example, the occurrence of an error involved in the modulo operation.

The present invention has been made in order to solve the above-mentioned problems, and has an object to obtain a wireless communication device and a number-of-transmission-streams determination method, which are capable of suppressing an increase in transmission power at a base station while improving an SNR at each wireless terminal with an increased degree of freedom of an array.

Solution to Problem

According to one embodiment of the present invention, there is provided a wireless communication device, which is configured to transmit a single stream or a plurality of streams to each of a plurality of counterpart wireless communication devices to be targets, the wireless communication device including: a reception-side baseband processing unit; a MAC processing unit; and a transmission-side baseband processing unit, the reception-side baseband processing unit being configured to: acquire transmission line quality information with respect to each of the plurality of counterpart wireless communication devices; and notify the acquired transmission line quality information; the MAC processing unit being configured to: execute, for each of the plurality of counterpart wireless communication devices, first processing for determining a maximum number of assignable transmission streams based on the transmission line quality information notified by the reception-side baseband processing unit; execute, for each of the plurality of counterpart wireless communication devices, second processing for calculating a diversity order value of the single stream or of each of the plurality of streams through use of the maximum number of transmission streams obtained by the first processing, and comparing the calculated diversity order value of the single stream or of each of the plurality of streams and a diversity order lower limit value set in advance to each other, to thereby determine a number of transmission streams; and determine the number of transmission streams obtained by the second processing as a finally-determined number of transmission streams for each of the plurality of counterpart wireless communication devices, and notify the finally-determined number of transmission streams that has been determined; and the transmission-side baseband processing unit being configured to transmit the single stream or the respective plurality of streams to the respective counterpart wireless communication devices simultaneously at the same frequency based on the finally-determined numbers of transmission streams for the respective counterpart wireless communication devices, which are notified by the MAC processing unit.

Further, according to one embodiment of the present invention, there is provided a number-of-transmission-streams determination method, which is executed by a wireless communication device configured to transmit a single stream or a plurality of streams to each of a plurality of counterpart wireless communication devices to be targets, the number-of-transmission-streams determination method including the steps of: executing, for each of the plurality of counterpart wireless communication devices, first processing for determining a maximum number of assignable transmission streams based on the transmission line quality information with respect to each of the plurality of counterpart wireless communication devices; executing, for each of the plurality of counterpart wireless communication devices, second processing for calculating a diversity order value of the single stream or of each of the plurality of streams through use of the maximum number of transmission streams obtained by the first processing, and comparing the calculated diversity order value of the single stream or of each of the plurality of streams and a diversity order lower limit value set in advance to each other, to thereby determine a number of transmission streams; and determining the number of transmission streams obtained by the second processing as a finally-determined number of transmission streams for each of the plurality of counterpart wireless communication devices, and notifying the finally-determined number of transmission streams that has been determined.

Advantageous Effects of Invention

According to the present invention, it is possible to obtain the wireless communication device and the number-of-transmission-streams determination method, which are capable of suppressing an increase in transmission power at the base station while improving the SNR at each wireless terminal with an increased degree of freedom of an array.

Brief Description of Drawings

FIG. 1 is a configuration diagram for illustrating an example of a wireless communication system in a first embodiment of the present invention.
FIG. 2 is a configuration diagram for illustrating an example of a wireless base station in the first embodiment of the present invention.
FIG. 3 is a flow chart for illustrating a series of operations of a MAC processing unit in the first embodiment of the present invention.
FIG. 4 is explanatory tables for showing an example of processing performed by the MAC processing unit when a block duplex diagonalization method is employed as a transmission precoding method in the first embodiment of the present invention.
FIG. 5 is explanatory tables for showing an example of processing performed by the MAC processing unit when a block triangulation method is employed as a transmission precoding method in the first embodiment of the present invention.
FIG. 6 is a configuration diagram for illustrating an example of hardware configuration of a transmission-side baseband processing unit, a reception-side baseband processing unit, and the MAC processing unit in the first embodiment of the present invention.
FIG. 7 is explanatory tables for showing an example of processing performed by the MAC processing unit when a block triangulation method is employed as a transmission precoding method in a third embodiment of the present invention.
FIG. 8 is explanatory tables for showing an example of processing performed by the MAC processing unit when a block triangulation method is employed as a transmission precoding method in a fourth embodiment of the present invention.

Description of Embodiments

Now, a wireless communication device and a number-of-transmission-streams determination method according to each of preferred embodiments of the present invention are described with reference to the accompanying drawings. In the description of the drawings, like parts or corresponding parts are denoted by like reference symbols, and duplicate descriptions thereof are omitted. In each of the embodiments, a character with a bar is described by having "(bar)" appended to the character, a character with a hat is described by having "(hat)" appended to the character, and a character with a tilde is described by having "(tilde)" appended to the character.
Each of the embodiments of the present invention is described by taking an exemplary case in which the wireless communication device is applied as a wireless base station and a counterpart wireless communication device configured to communicate to/from the wireless communication device is a wireless terminal.

First Embodiment

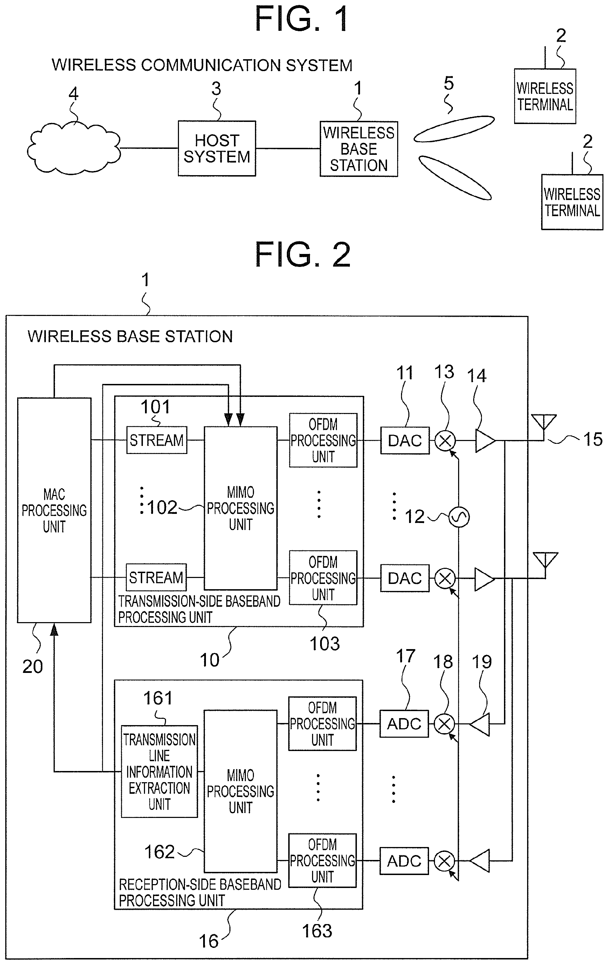

FIG. 1 is a configuration diagram for illustrating an example of a wireless communication system in a first embodiment of the present invention. The wireless communication system illustrated in FIG. 1 includes a wireless base station 1, a plurality of wireless terminals 2, and a host system 3. In order to describe a specific application example of the wireless communication device according to the first embodiment of the present invention, in FIG. 1, there is illustrated an exemplary case in which the wireless communication device is applied as the wireless base station 1.
The wireless base station 1 is configured to be capable of forming a transmission beam 5 for the plurality of wireless terminals 2 through use of a plurality of antennas, and uses one or more transmission beams 5 to communicate to/from the wireless terminal 2 being a counterpart device.

The wireless terminal 2 includes a plurality of antennas. In FIG. 1, there is illustrated an exemplary case in which two wireless terminals 2 are present, which is merely an example, and two or more wireless terminals 2 may be configured to be capable of simultaneously communicating to/from the wireless base station 1.

The host system 3 is a device provided on a core network side. A gateway, a mobility management entity (MME), or the like corresponds to the host system 3.

The wireless base station 1 is connected to the host system 3 via a communication line, and the host system 3 is connected to a network 4. The network 4 is another network different from a wireless communication network formed of the wireless base station 1, the wireless terminal 2, and the host system 3.

Next, the configuration and the operation of the wireless base station 1 are described with reference to FIG. 2. FIG. 2 is a configuration diagram for illustrating an example of the wireless base station 1 in the first embodiment of the present invention.

In FIG. 2, only main components of the wireless base station 1 are described, and descriptions of components relating to processing that is not directly involved in achieving the invention, for example, components relating to the process of communication to/from the host system 3, are omitted. In FIG. 2, an exemplary case of constructing the wireless base station 1 by applying the present invention to the wireless communication device configured to perform orthogonal frequency division multiplexing (OFDM) processing is described.

However, the wireless communication device to which the present invention can be applied is not limited to the wireless communication device configured to perform multi-carrier transmission. In the first embodiment, as mentioned above, an exemplary case in which the wireless communication device is applied as the wireless base station 1 is described, but the present invention is not limited thereto, and the wireless communication device may be applied as, for example, the wireless terminal 2.

The wireless base station 1 illustrated in FIG. 2 includes a transmission-side baseband processing unit 10, a plurality of digital-to-analog converters (DACs) 11, a local oscillator 12, a plurality of mixers 13, a plurality of power amplifiers (PAs) 14, a plurality of antennas 15, a reception-side baseband processing unit 16, a plurality of analog-to-digital converters (ADCs) 17, a plurality of mixers 18, a plurality of low noise amplifiers (LNAs) 19, and a MAC processing unit 20.

The antenna 15 referred to herein means an antenna including an array antenna as well. The wireless base station 1 provides a function of performing spatial multiplexing on signals addressed to the respective wireless terminals 2 and simultaneously transmitting the signals to the plurality of wireless terminals 2, and the function includes multi-user MIMO and single-user MIMO.

The transmission-side baseband processing unit 10 includes a MIMO processing unit 102 and a plurality of OFDM processing units 103, and generates transmission signals to be transmitted to the wireless terminals 2.

When streams 101, which are a signal stream group to be transmitted to the wireless terminal 2 by the spatial multiplexing, are input from the MAC processing unit 20, the MIMO processing unit 102 of the transmission-side baseband processing unit 10 carries out MIMO processing including, for example, precoding on the stream 101.

A plurality of streams 101 are a data sequence to be transmitted by being multiplexed in a space, which considers the fact that the wireless terminals 2 at transmission destinations differ from one another. The precoding is processing for sorting the transmission signals to the respective antennas 15 by multiplying each of the streams 101 by a transmission weight for weighting.

The MIMO processing unit 102 calculates the transmission weight after acquiring the transmission line estimation information between the wireless base station 1 and the wireless terminal 2 from a transmission line information extraction unit 161 described later. At this time, a target combination of the wireless terminals 2 is notified to the MIMO processing unit 102 by the MAC processing unit 20 described later. The acquisition of the transmission line estimation information between the wireless base station 1 and the wireless terminal 2 is described later.

The OFDM processing unit 103 carries out modulation processing, inverse fast Fourier transform (IFFT) processing, cyclic prefix (CP) addition processing, and the like on a signal input from the MIMO processing unit 102 to generate a transmission signal to be transmitted to the wireless terminal 2. In the modulation processing, the input signal is modulated based on quadrature phase shift keying (QPSK), quadrature amplitude modulation (QAM), and other such modulation scheme.

The DAC 11 converts the transmission signal generated by the transmission-side baseband processing unit 10 from a digital signal into an analog signal.

The mixer 13 up-converts the analog signal output from the DAC 11 into a carrier wave frequency based on a local oscillation signal output from the local oscillator 12. Then, a desired radio wave is transmitted through the antenna 15 after transmission power is amplified by the PA 14.

The antenna 15 receives the signal transmitted from the wireless terminal 2. The signal received by the antenna 15 is input to the mixer 18 through the LNA 19.

The mixer 18 down-converts the received analog signal of the carrier wave frequency, which is input from the antenna 15, into a signal of a baseband frequency based on a local oscillation signal output from the local oscillator 12.

The ADC 17 converts the received analog signal of the baseband frequency output from the mixer 18 into a digital signal. The received signal converted into the digital signal by the ADC 17 is input to the reception-side baseband processing unit 16.

The reception-side baseband processing unit 16 includes the transmission line information extraction unit 161, a MIMO processing unit 162 and a plurality of OFDM processing units 163. The reception-side baseband processing unit 16 processes the signal received from the wireless terminal 2 via the antenna 15, the LNA 19, the mixer 18, and the ADC 17 to restore data transmitted from the wireless terminal 2.

The OFDM processing unit 163 of the reception-side baseband processing unit 16 carries out CP removal processing, FFT processing, demodulation processing, and the like on the signal input from the ADC 17 to perform demodulation.

The MIMO processing unit 162 performs weighted combination on the received signals after the demodulation, which have been input from the respective OFDM processing units 163. In the weighted combination performed by the MIMO processing unit 162, for example, transmission line estimation is performed based on a known sequence included in the received signal from the wireless terminal 2, weights for the respective received signals input from the OFDM processing units 163 are calculated from a transmission line estimation value obtained as a result of the transmission line estimation, and the respective received signals are multiplied by the calculated weights to perform weighting, and are then combined with one another.

The transmission line information extraction unit 161 extracts the transmission line estimation information fed back by the wireless terminal 2 from demodulated data being a demodulated signal subjected to the weighted combination by the MIMO processing unit 162, and outputs the transmission line estimation information to the MIMO processing unit 102 of the transmission-side baseband processing unit 10. The transmission line information extraction unit 161 also extracts transmission line quality information from the demodulated data in the same manner as in the case of the transmission line estimation information, and outputs the transmission line quality information to the MAC processing unit 20.

The transmission line information extraction unit 161 may be configured to output the transmission line estimation value to the MIMO processing unit 102 of the transmission-side baseband processing unit 10 after obtaining the transmission line estimation value from a known sequence signal, for example, a sounding reference signal (SRS), transmitted from the wireless terminal 2 instead of the above-mentioned processing. The transmission line information extraction unit 161 may also be configured to output a signal-to-interference and noise ratio (SINR), a rank indicator (RI), and other such transmission line quality information, which are calculated from the obtained transmission line estimation value, to the MAC processing unit 20.

In this manner, the reception-side baseband processing unit 16 acquires transmission line information on a transmission line with respect to each of the wireless terminals 2, and notifies the MAC processing unit 20 of the acquired transmission line information.

Next, the processing of the MIMO processing unit 102 included in the transmission-side baseband processing unit 10 is described through use of an MU-MIMO downlink system configured to perform the precoding modeled by a mathematical expression. The description on the transmission side corresponds to the processing of the MIMO processing unit 102 included in the transmission-side baseband processing unit 10. When it is required to assign numbers to the respective wireless terminals 2, #i (i=1, 2, ..., and $N_{usr}$) is used as a wireless terminal number to notate the wireless terminal as "wireless terminal 2#i".

Assuming that, for the wireless terminal 2#i notified by the MAC processing unit 20, a transmission signal vector is $s_i(t)$, a transmission power distribution matrix is $P_i$, a transmission precoding (beam formation) matrix is $B_i$, a true $N_r \times N_t$ transmission line matrix is $\hat{H}_i$, an $N_w \times N_r$ received weight matrix is $W_i$, a true received signal vector before received weight multiplication is $y_i(t)$, the received signal vector after the received weight multiplication is $r_i(t)$, and a true received thermal noise vector is $\hat{n}_i(t)$, it is possible to define a system model as Expression (1).

$$
\begin{bmatrix} r_1(t) \\ \vdots \\ r_{N_{usr}}(t) \end{bmatrix} = \begin{bmatrix} W_1 & \cdots & 0 \\ \vdots & \ddots & \vdots \\ 0 & \cdots & W_{N_{usr}} \end{bmatrix} \begin{bmatrix} y_1(t) \\ \vdots \\ y_{N_{usr}}(t) \end{bmatrix}
$$

$$
= \begin{bmatrix} W_1 & \cdots & 0 \\ \vdots & \ddots & \vdots \\ 0 & \cdots & W_{N_{usr}} \end{bmatrix} \left( \begin{bmatrix} \hat{H}_1 \\ \vdots \\ \hat{H}_{N_{usr}} \end{bmatrix} \begin{bmatrix} B_1 & \cdots & B_{N_{usr}} \end{bmatrix} \begin{bmatrix} \sqrt{P_1} & \cdots & 0 \\ \vdots & \ddots & \vdots \\ 0 & \cdots & \sqrt{P_{N_{usr}}} \end{bmatrix} \begin{bmatrix} s_1(t) \\ \vdots \\ s_{N_{usr}}(t) \end{bmatrix} + \begin{bmatrix} \hat{n}_1(t) \\ \vdots \\ \hat{n}_{N_{usr}}(t) \end{bmatrix} \right)
$$

$$(1)$$

The MIMO processing unit 102 included in the transmission-side baseband processing unit 10 uses the transmission line matrix $\hat{H}_i$ acquired from the transmission line information extraction unit 161 included in the reception-side baseband processing unit 16 to determine the transmission power distribution matrix $P_i$ and the transmission precoding matrix $B_i$, and the wireless terminal 2#i determines the received weight matrix $W_i$. The MAC processing unit 20 can also notify each of the wireless terminals 2 of the number of streams to be transmitted, to thereby set the transmission power of the stream to be kept from being transmitted to zero and distribute the transmission power corresponding to the above-mentioned stream to other streams.

In addition, assuming that an $N_w \times N_t$ matrix obtained by multiplying the received weight matrix and the true transmission line matrix is set as a new transmission line matrix $H_i$ and an $N_w$-order vector obtained by multiplying the true received thermal noise vector by the received weight matrix is set as a new received thermal noise vector $n_i$, the system model is defined as Expression (2).

$$
\begin{bmatrix} r_1(t) \\ \vdots \\ r_{N_{usr}}(t) \end{bmatrix} = \begin{bmatrix} H_1 \\ \vdots \\ H_{N_{usr}} \end{bmatrix} \begin{bmatrix} B_1 & \cdots & B_{N_{usr}} \end{bmatrix} \begin{bmatrix} \sqrt{P_1} & \cdots & 0 \\ \vdots & \ddots & \vdots \\ 0 & \cdots & \sqrt{P_{N_{usr}}} \end{bmatrix} \begin{bmatrix} s_1(t) \\ \vdots \\ s_{N_{usr}}(t) \end{bmatrix} + \begin{bmatrix} n_1(t) \\ \vdots \\ n_{N_{usr}}(t) \end{bmatrix} \tag{2}
$$

Expression (2) can also be expressed as Expression (3).

$$
\bar{r}(t) = \bar{H}\bar{B}\bar{P}\bar{s}(t) + \bar{n}(t) \tag{3}
$$

In this case, $\bar{H}$ is defined as an $N_{w,total} \times N_t$ system transmission line matrix including the received weights, and $\bar{B}$ is defined as $N_t \times N_{st}$ system precoding matrix (where $N_{st}$ is the total number of streams with respect to all the wireless terminals 2). $\bar{P}$ is defined as a system transmission power matrix for defining the distribution of transmission power with respect to the wireless terminals 2, $\bar{s}(t)$ is defined as an $N_{st}$-order system transmission vector, and $\bar{n}(t)$ is defined as $N_{w,total}$-order system noise vector after the received weight multiplication. The product of $\bar{H}$ and $\bar{B}$ can be grasped as a system transmission line matrix $\bar{H}_e$ that is effective based on transmission beam formation.

A transmission precoding method of maintaining, in the effective system transmission line matrix expressed by Expression (4), only block diagonal terms, namely, $H_iB_i$ ($i$=1, 2, ..., and $N_{usr}$) components and setting the other block off-diagonal terms to a zero matrix 0 is the BD method disclosed in each of Non-patent Literatures 1 and 2.

$$
\bar{H}_e = \begin{bmatrix} H_1B_1 & H_1B_2 & \cdots & H_1B_{N_{usr}} \\ H_2B_1 & H_2B_2 & \cdots & H_2B_{N_{usr}} \\ \vdots & \vdots & \ddots & \vdots \\ H_{N_{usr}}B_1 & H_{N_{usr}}B_2 & \cdots & H_{N_{usr}}B_{N_{usr}} \end{bmatrix} \tag{4}
$$

In addition, a transmission precoding method of processing the effective system transmission line matrix so as to become a form expressed as, for example, Expression (5) is the block multiplex diagonalization method disclosed in Non-patent Literature 3. Expression (5) is an example of block duplex diagonalization. A transmission precoding method of processing the effective system transmission line matrix so as to become a form expressed as Expression (6) is the block triangulation method disclosed in each of Patent Literatures 1 and 2.

$$\bar{H}_e = \begin{bmatrix} H_1B_1 & 0 & 0 & \cdots & 0 & 0 \\ H_2B_1 & H_2B_2 & 0 & \cdots & 0 & 0 \\ 0 & H_3B_2 & H_3B_3 & \ddots & \vdots & \vdots \\ \vdots & \vdots & \ddots & \ddots & \ddots & \vdots \\ 0 & 0 & \cdots & H_{N_{usr}-1}B_{N_{usr}-2} & H_{N_{usr}-1}B_{N_{usr}-1} & 0 \\ 0 & 0 & \cdots & 0 & H_{N_{usr}}B_{N_{usr}-1} & H_{N_{usr}}B_{N_{usr}} \end{bmatrix} \quad (5)$$

$$\bar{H}_e = \begin{bmatrix} H_1B_1 & 0 & 0 & \cdots & 0 & 0 \\ H_2B_1 & H_2B_2 & 0 & \cdots & 0 & 0 \\ H_3B_1 & H_3B_2 & H_3B_3 & \ddots & \vdots & \vdots \\ \vdots & \vdots & \ddots & \ddots & \ddots & \vdots \\ H_{N_{usr}-1}B_1 & H_{N_{usr}-1}B_2 & \cdots & H_{N_{usr}-1}B_{N_{usr}-2} & H_{N_{usr}-1}B_{N_{usr}-1} & 0 \\ H_{N_{usr}}B_1 & H_{N_{usr}}B_2 & \cdots & H_{N_{usr}}B_{N_{usr}-2} & H_{N_{usr}}B_{N_{usr}-1} & H_{N_{usr}}B_{N_{usr}} \end{bmatrix} \quad (6)$$

Non-linear MU-MIMO processing for performing serial interference elimination on the transmission side can also be employed to eliminate a component to become IUI on the reception side in advance on the transmission side. In this case, the transmission-side baseband processing unit 10 is configured to execute the non-linear MU-MIMO processing for performing the serial interference elimination between user streams. The non-linear MU-MIMO processing is described below through use of an example of the block duplex diagonalization represented by Expression (5).

The received signal observed on the wireless terminal 2#i (i≥2) at the time of the precoding can be expressed as Expression (7).

$$r_i(t) = H_iB_i\sqrt{P_i}s_i(t) + H_iB_{i-1}\sqrt{P_{i-1}}s_{i-1}(t) + n_i(t) \quad (7)$$

In this case, assuming that a transmission signal $s_{i-1}(t)$ with respect to the wireless terminal 2#(i-1) has been determined, it is possible to eliminate interference at a reception point by setting $s_i(t)$ as a signal given by Expression (8).

$$\tilde{s}_i(t) = s_i(t) - \frac{H_iB_{i-1}\sqrt{P_{i-1}}}{H_iB_i\sqrt{P_i}}s_{i-1}(t)$$

$$(8)$$

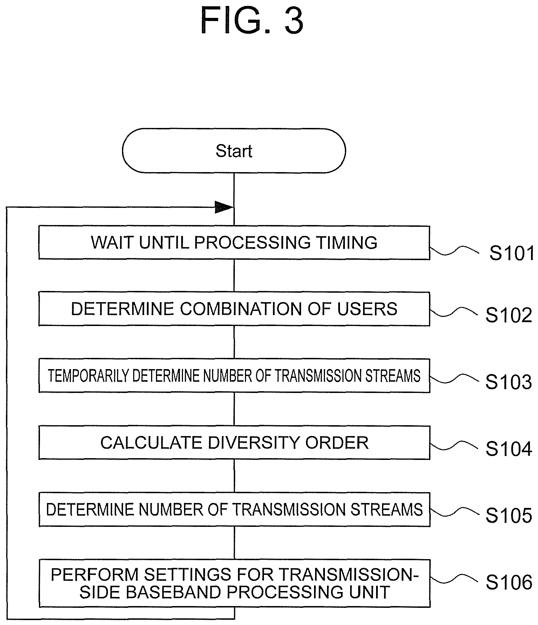

Next, the operation of the MAC processing unit 20 is described with reference to a flow chart of FIG. 3. FIG. 3 is a flow chart for illustrating a series of operations of the MAC processing unit 20 in the first embodiment of the present invention.

The following description of the operation of the MAC processing unit 20 is focused on operations relating to the first embodiment. The description is given on the premise that the wireless base station 1, specifically, the reception-side baseband processing unit 16, has already acquired the maximum number of received streams or other such terminal capability of the wireless terminal 2 when connection processing is performed between the wireless base station 1 and the wireless terminal 2. It is also assumed that the wireless terminal 2 communicating to/from the wireless base station 1 is a wireless terminal 2 to be a target of processing described below.

First, the MAC processing unit 20 waits until a processing timing (Step S101), and determines the combination of the wireless terminals 2 serving as users involving spatial multiplexing using MU-MIMO based on the terminal capability of the wireless terminal 2, which has been acquired, and the SINR, the RI, and other such transmission line quality information, which are acquired from the transmission line information extraction unit 161 (Step S102). After that, the MAC processing unit 20 determines a maximum number of transmission streams that can be assigned to each of the wireless terminals 2, and temporarily determines the number of transmission streams to be transmitted in actuality (Step S103). The number of transmission streams temporarily determined in Step S103 is referred to as "temporary number of transmission streams".

In this manner, the MAC processing unit 20 executes, for each of the wireless terminals 2, processing for determining the maximum number of assignable transmission streams based on the transmission line quality information notified by the reception-side baseband processing unit 16. The MAC processing unit 20 also executes, for each of the wireless terminals 2, processing for determining the temporary number of transmission streams based on the transmission line quality information notified by the reception-side baseband processing unit 16.

Subsequently, the MAC processing unit 20 calculates a diversity order value described later for each of the wireless terminals 2 and each of the streams 101 based on the combination of users involving spatial multiplexing, which is determined in Step S102, and the maximum number of transmission streams, which is determined in Step S103 (Step S104).

The MAC processing unit 20 compares a result of the calculation performed in Step S104 to a lower limit value of the diversity order value set in advance, and avoids transmitting a stream having a value smaller than the lower limit value to the transmission-side baseband processing unit 10, that is, determines the number of transmission streams (Step S105).

In this manner, the MAC processing unit 20 uses the maximum number of transmission streams, which is calculated for each of the wireless terminals 2, to execute, for each of the wireless terminals 2, processing for calculating the diversity order value of each of the streams 101, and comparing the calculated diversity order value of each of the streams 101 and a diversity order lower limit value set in advance to each other, to thereby determine the number of transmission streams.

Subsequently, the MAC processing unit 20 compares the temporary number of transmission streams to be transmitted in actuality, which is determined in Step S103, and the number of transmission streams, which is determined in Step S105, and uses the smaller value. That is, the MAC processing unit 20 compares the number of transmission streams, which is calculated for each of the wireless terminals 2, and the temporary number of transmission streams, which is calculated for each of the wireless terminals 2, to each other, and determines the smaller value as a finally-determined number of transmission streams for each of the wireless terminals 2.

The MAC processing unit 20 notifies the transmission-side baseband processing unit 10 of, as results of those processing steps, the combination of the users and the finally-determined number of transmission streams, which is determined for each of the wireless terminals 2, that is, the number of transmission streams to be assigned to each of the wireless terminals 2, and returns to the processing of Step S101 (Step S106).

The transmission-side baseband processing unit 10 transmits the respective streams 101 to the respective wireless terminals 2 simultaneously at the same frequency based on the finally-determined numbers of transmission streams for the respective wireless terminals 2, which are notified by the MAC processing unit 20.

The MAC processing unit 20 may be configured to determine the number of transmission streams, which are calculated for each of the wireless terminals 2, as the finally-determined number of transmission streams as it is for each of the wireless terminals 2. In this case, the MAC processing unit 20 is not required to calculate the temporarily determined number of transmission streams for each of the wireless terminals 2.

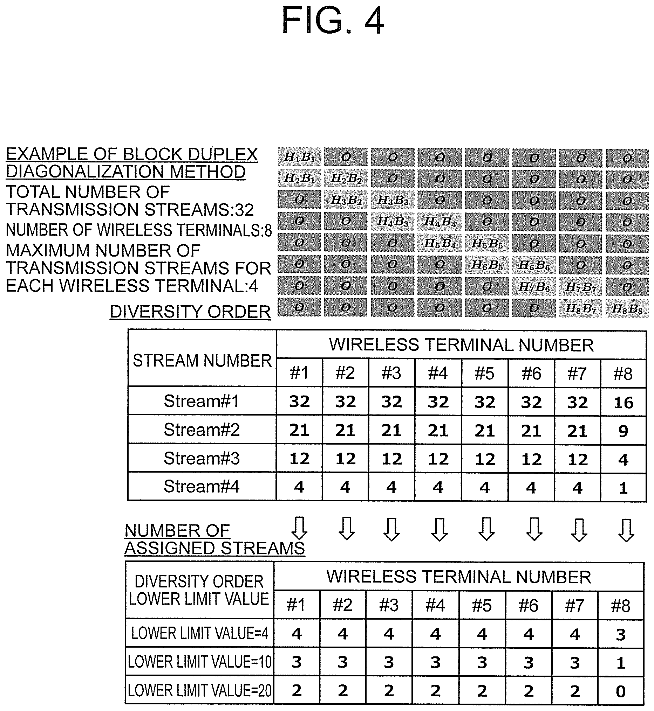

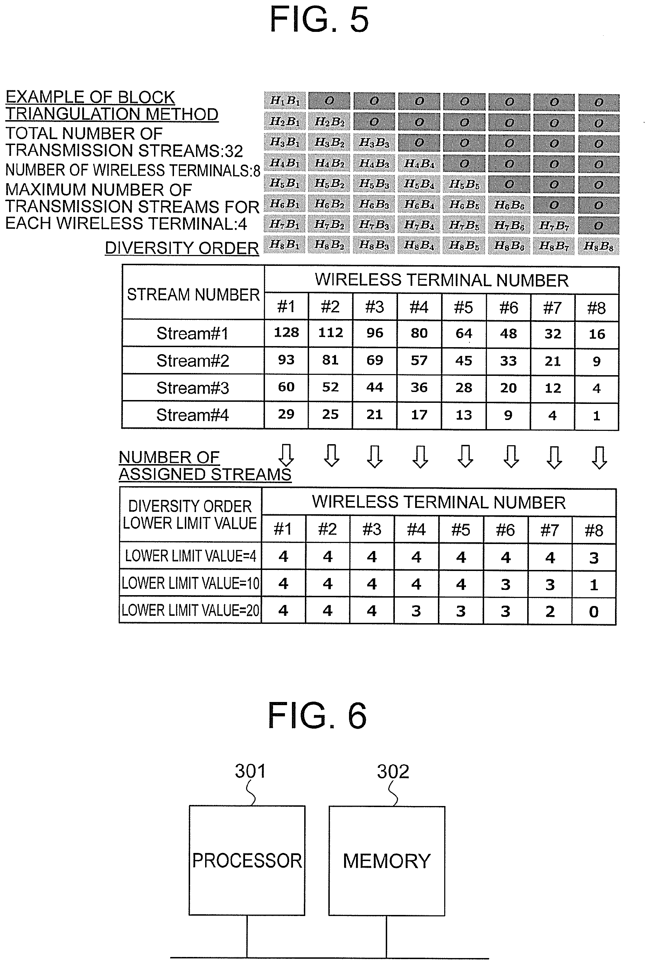

Next, the calculation of the diversity order, which is performed in Step S104, and the determination of the number of transmission streams, which is performed in Step S105, are described with reference to FIG. 4 and FIG. 5.

FIG. 4 is explanatory tables for showing an example of processing performed by the MAC processing unit 20 when a block duplex diagonalization method is employed as a transmission precoding method in the first embodiment of the present invention. FIG. 5 is explanatory tables for showing an example of processing performed by the MAC processing unit 20 when a block triangulation method is employed as the transmission precoding method in the first embodiment of the present invention.

In FIG. 4 and FIG. 5, as a specific example, it is assumed that the total number of transmission streams is 32, the number of wireless terminals is 8, and the maximum number of transmission streams for each wireless terminal is 4. In FIG. 4 and FIG. 5, it is also assumed that wireless terminals having wireless terminal numbers #1 to #8 are present, and streams having the stream numbers Stream#1 to Stream#4 are present.

In this case, the diversity order of each of the streams 101 is defined as Expression (9).

$$(\text{diversity order}) = (A - (C - 1)) \times (B - (C - 1)) \quad (9)$$

In Expression (9), A, B, and C satisfy the following relationship.

A=(number of rows of H(bar)$_e$ matrix that is not nulled for a target stream)
B=(maximum number of transmission streams for the wireless terminal 2)
C=(stream number); (stream number of X-th eigenvalue)=X

When a block duplex diagonalization method is employed as the transmission precoding method, the diversity order values are calculated as shown in FIG. 4.

Specifically, Stream#1, Stream#2, Stream#3, and Stream#4 are calculated as 32, 21, 12, and 4, respectively for the wireless terminals 2 having the numbers #1 to #7. For the wireless terminal 2 having the number #8, Stream#1, Stream#2, Stream#3, and Stream#4 are calculated as 16, 9, 4, and 1, respectively.

In addition, the diversity order value of each of the numbers Stream#1 to Stream#4 calculated for each of #1 to #8 and the diversity order lower limit value are compared to each other to inhibit a stream having a diversity order value smaller than the diversity order lower limit value from being transmitted.

In FIG. 4, the number of assigned streams, namely, the number of transmission streams, used when the diversity order lower limit value is set to each of 4, 10, and 20 is illustrated for each of #1 to #8. As shown in FIG. 4, specifically, for the wireless terminals 2 having the numbers #1 to #7, the number of transmission streams is 4 when the lower limit value is 4, the number of transmission streams is 3 when the lower limit value is 10, and the number of transmission streams is 2 when the lower limit value is 20. For the wireless terminal 2 having the number #8, the number of transmission streams is 3 when the lower limit value is 4, the number of transmission streams is 1 when the lower limit value is 10, and the number of transmission streams is 0 when the lower limit value is 20.

When a block triangulation method is employed as the transmission precoding method, the diversity order value and the number of transmission streams are calculated as shown in FIG. 5. FIG. 5 is interpreted in the same manner as FIG. 4, and hence detailed descriptions thereof are omitted.

Next, with reference to FIG. 6, an example of hardware configuration of the transmission-side baseband processing unit 10, the reception-side baseband processing unit 16, and the MAC processing unit 20 of the wireless base station 1 is described. FIG. 6 is a configuration diagram for illustrating an example of the hardware configuration of the transmission-side baseband processing unit 10, the reception-side baseband processing unit 16, and the MAC processing unit 20 in the first embodiment of the present invention.

The MIMO processing unit 102 of the transmission-side baseband processing unit 10 included in the wireless base station 1 is implemented by an electronic circuit for performing the precoding on the input stream 101 or by a combination of an electronic circuit and a processor 301 illustrated in FIG. 6 executing a program stored in the memory 302.

The OFDM processing unit 103 is an electronic circuit for performing the modulation processing, the IFFT processing, the CP addition processing, and the like on a signal input from the MIMO processing unit 102.

The MIMO processing unit 162 of the reception-side baseband processing unit 16 included in the wireless base station 1 is implemented by an electronic circuit for performing the weighted combination on the received signals input from the respective OFDM processing units 163 or by a combination of an electronic circuit and the processor 301 illustrated in FIG. 6 executing a program stored in the memory 302.

The OFDM processing unit 163 is an electronic circuit for performing the CP removal processing, the FFT processing, the demodulation processing, and the like on the signal input from the ADC 17.

The transmission line information extraction unit 161 is implemented by an electronic circuit or by the processor 301 illustrated in FIG. 6 executing a program stored in the memory 302.

The MAC processing unit 20 is implemented by a combination of an electronic circuit and the processor 301 illustrated in FIG. 6 executing a program stored in the memory 302.

Specific examples of the processor 301 include a central processing unit (also referred to as "CPU", "processing unit", "arithmetic unit", "microprocessor", "microcomputer", "processor", "digital signal processor (DSP)") and a system large scale integration (LSI).

Specific examples of the memory 302 include a random-access memory (RAM), a read only memory (ROM), a flash memory, an erasable programmable read-only memory (EPROM), an electrically erasable programmable read-only memory (EEPROM), and other such non-volatile or volatile semiconductor memories.

As described above, the first embodiment is configured to execute, for each of a plurality of counterpart wireless communication devices to be targets, first processing for determining the maximum number of assignable transmission streams based on the transmission line quality information with respect to each of the plurality of counterpart wireless communication devices . The first embodiment is also configured to use the maximum number of transmission streams obtained by the first processing to execute, for each of the counterpart wireless communication devices, second processing for calculating the diversity order value of each of the streams, and comparing the calculated diversity order value of each of the streams and the diversity order lower limit value set in advance to each other, to thereby determine the number of transmission streams.

Further, the first embodiment is configured to determine the number of transmission streams obtained by the second processing as the finally-determined number of transmission streams for each of the counterpart wireless communication devices, and to notify the finally-determined number of transmission streams that has been determined.

Furthermore, in accordance with the above-mentioned configuration, the first embodiment is configured to: execute third processing for determining the temporary number of transmission streams based on the transmission line quality information for each of the counterpart wireless communication devices; compare the number of transmission streams obtained by the second processing and the temporary number of transmission streams obtained by the third processing to each other; and determine the smaller one as the finally-determined number of transmission streams for each of the counterpart wireless communication devices.

With this configuration, it is possible to suppress an increase in transmission power at the base station while improving an SNR at each wireless terminal with an increased degree of freedom of an array.

That is, with the above-mentioned configuration, a block multiplex diagonalization method, a block triangulation method, or other such transmission precoding method is employed as the transmission precoding method to increase the degree of freedom of the array, to thereby improve an SNR at each wireless terminal. Meanwhile, limitations are imposed on streams to be transmitted to the respective wireless terminals based on the diversity order value. Therefore, particularly when the addition of the non-linear MU-MIMO processing is involved, a stream having a low reception power can be eliminated, with the result that it is possible to suppress an increase in transmission power at the base station.

Second Embodiment

In a second embodiment of the present invention, in accordance with the configuration of the above-mentioned first embodiment, the MAC processing unit 20 having a function of changing the diversity order lower limit value used for determining the number of transmission streams for each of the wireless terminals 2 is described. In the second embodiment, the descriptions of the same points as those of the above-mentioned first embodiment are omitted. Points different from those of the above-mentioned first embodiment are mainly described.

The MAC processing unit 20 in the second embodiment calculates reception powers of the respective streams as a determination parameter for each of the wireless terminals 2 based on the transmission line quality information including a received signal strength (RSS).

The MAC processing unit 20 also determines the wireless terminal 2 for which the diversity order lower limit value is to be changed based on the reception powers of the respective streams serving as a determination parameter, which are calculated for each of the wireless terminals 2. The MAC processing unit 20 further changes the diversity order lower limit value to be compared to each diversity order value corresponding to the wireless terminal 2 determined in this manner.

For a specific description of the above-mentioned configuration, it is assumed here that a block duplex diagonalization method is employed as the transmission precoding method, and the description is given through use of Expression (8) .

In Expression (8), when the power of any one element of the wireless terminal 2#i and an effective transmission line matrix $H_iB_i$ of the stream for the wireless terminal 2#i has a value smaller than a set threshold value, the transmission power of $s(\text{tilde})_i(t)$ adversely increases. In view of this, for the wireless terminal 2 in the above-mentioned case, such a diversity order lower limit value as exemplified in FIG. 4 is changed to a larger value in inversely proportion to the power value of the element having a power value smaller than the set threshold value.

When it is difficult to examine the power of the element of $H_iB_i$, the MAC processing unit 20 may calculate an average reception power, which is the average value of the reception powers of the respective streams, based on the transmission line quality information for each of the wireless terminals 2, and perform the same processing as the above-mentioned processing through use of the average reception power for each wireless terminal.

As described above, in accordance with the configuration of the above-mentioned first embodiment, the second embodiment is configured to determine the counterpart wireless communication device for which the diversity order lower limit value is to be changed based on the reception powers of the respective streams or the average reception power calculated for each of the counterpart wireless communication devices.

With this configuration, the same effect as that of the above-mentioned first embodiment can be obtained, and the stream having a low reception power can be inhibited from being transmitted to the wireless terminal having a low reception power, with the result that it is possible to suppress an increase in transmission power at the base station.

Third Embodiment

In a third embodiment of the present invention, in accordance with the configuration of the above-mentioned first embodiment, the MAC processing unit 20 having a function of determining respective streams to be assigned to the respective wireless terminals 2 is described. In the third embodiment, the descriptions of the same points as those of the above-mentioned first embodiment are omitted. Points different from those of the above-mentioned first embodiment are mainly described.

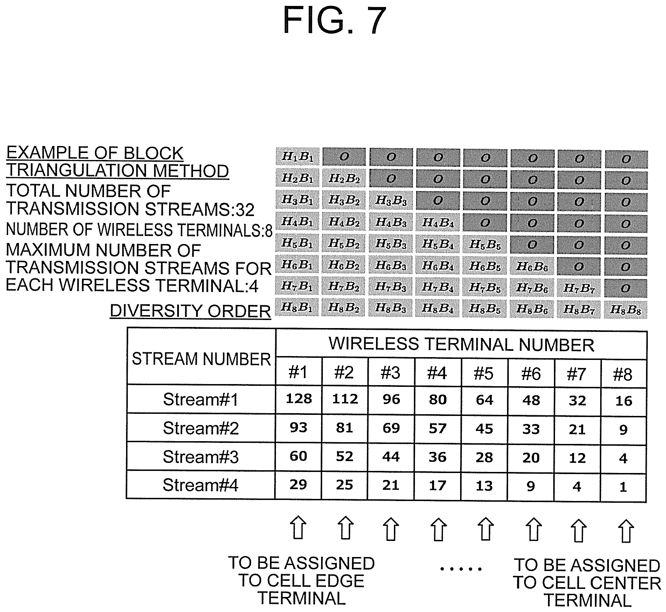

FIG. 7 is explanatory tables for showing an example of processing performed by the MAC processing unit 20 when a block triangulation method is employed as the transmission precoding method in the third embodiment of the present invention. The conditions shown in FIG. 7 are the same conditions as those of FIG. 5.

When the diversity order value is obtained in the above-mentioned procedure illustrated in FIG. 3, as shown in FIG. 7, the MAC processing unit 20 assigns a stream expected to have a large diversity order value to the wireless terminal 2 located at a cell edge. Meanwhile, the MAC processing unit 20 assigns a stream expected to have a small diversity order value to the wireless terminal 2 located at a cell center.

Specifically, the MAC processing unit 20 calculates, based on the transmission line quality information notified by the transmission line information extraction unit 161, the average reception power, which is the average value of the reception powers of the respective streams, or an average SINR, which is the average value of the SINRs of the respective streams, as a determination parameter for each of the wireless terminals 2. The MAC processing unit 20 determines each of the streams to be assigned to each of the wireless terminals 2 based on the determination parameter calculated for each of the wireless terminals 2.

For example, as shown in FIG. 7, a stream having the largest diversity order value is assigned to the wireless terminal 2 corresponding to the cell edge terminal, that is, the wireless terminal 2 having the smallest value as the above-mentioned determination parameter. Meanwhile, a stream having the smallest diversity order value is assigned to the wireless terminal 2 corresponding to a cell center terminal, that is, the wireless terminal 2 having the largest value as the above-mentioned determination parameter.

The MAC processing unit 20 notifies the transmission-side baseband processing unit 10 of the combination of the wireless terminals 2 in consideration of the order of the stream based on a result of the above-mentioned determination.

As described above, in accordance with the configuration of the above-mentioned first embodiment, the third embodiment is configured to determine each of the streams to be assigned to each of the counterpart wireless communication devices based on the average reception power or the average SINR calculated for each of the counterpart wireless communication devices.

With this configuration, the same effect as that of the above-mentioned first embodiment can be obtained, and it is also possible to achieve improvement in transmission quality of a cell edge terminal or other such wireless terminal having a low average reception power or a small average SINR.

Fourth Embodiment

In a fourth embodiment of the present invention, in accordance with the configuration of the above-mentioned first embodiment, the MAC processing unit 20 having a function of distributing the transmission power in units of streams or in units of wireless terminals is described. In the fourth embodiment, the descriptions of the same points as those of the above-mentioned first embodiment are omitted. Points different from those of the above-mentioned first embodiment are mainly described.

The MAC processing unit 20 calculates the SINR of each of the streams for each of the wireless terminals 2 based on the transmission line quality information acquired from the transmission line information extraction unit 161, and compares the SINR of each of the streams calculated for each of the wireless terminals 2 and an SINR threshold value serving as a set threshold value to each other.

The MAC processing unit 20 cuts a surplus transmission power by which the set threshold value is exceeded for a stream having the SINR larger than the set threshold value. In addition, the MAC processing unit 20 assigns the surplus transmission power to another stream. The MAC processing unit 20 performs the above-mentioned series of control steps on the transmission-side baseband processing unit 10.

Meanwhile, when it is difficult to acquire the SINR in units of streams, the MAC processing unit 20 calculates the average SINR, which is the average value of the SINRs of the respective streams, for each of the wireless terminals 2, and compares the average SINR calculated for each of the wireless terminals 2 and the set threshold value to each other.

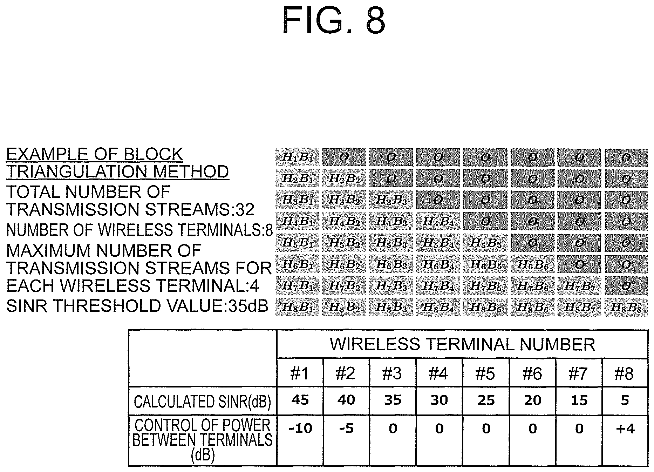

The MAC processing unit 20 cuts a surplus transmission power by which the set threshold value is exceeded for the wireless terminal 2 having an average SINR larger than the set threshold value. In addition, the MAC processing unit 20 assigns the surplus transmission power evenly to the stream for another wireless terminal 2. Such assignment of the surplus transmission power is described with reference to FIG. 8.

FIG. 8 is explanatory tables for showing an example of processing performed by the MAC processing unit 20 when a block triangulation method is employed as the transmission precoding method in the fourth embodiment of the present invention. The conditions shown in FIG. 8 are the same conditions as those of FIG. 5.

As shown in FIG. 8, assuming that the set threshold value is 35 dB, the wireless terminal 2 of #1 has a surplus power of +10 dB, and the wireless terminal 2 of #2 has a surplus power of +5 dB. In view of this, the MAC processing unit 20 uses those surplus powers to assign +4 dB to the wireless terminal 2 of #8. In short, in the example of FIG. 8, the surplus transmission power is assigned to the wireless terminal 2 having the smallest average SINR.

As described above, in accordance with the configuration of the above-mentioned first embodiment, the fourth embodiment is configured to: use the SINR of each of the streams calculated for each of the counterpart wireless communication devices to cut the surplus transmission power by which the set threshold value is exceeded for the stream having the SINR larger than the set threshold value; and assign the surplus transmission power to another stream.

Further, in accordance with the configuration of the above-mentioned first embodiment, the fourth embodiment is configured to: use the average SINR calculated for each of the counterpart wireless communication devices to cut the surplus transmission power by which the set threshold value is exceeded for the counterpart wireless communication device having an average SINR larger than the set threshold value; and assign the surplus transmission power to another counterpart wireless communication device.

With this configuration, the same effect as that of the above-mentioned first embodiment can be obtained, and it is also possible to achieve improvement in transmission quality of a wireless terminal having a low average SINR.

The first to fourth embodiments have been described individually, but the examples of the configurations disclosed respectively in the first to fourth embodiments can be freely combined with one another.

**Claims**

1. A wireless communication device, which is configured to transmit a single stream or a plurality of streams to each of a plurality of counterpart wireless communication devices to be targets, the wireless communication device comprising:

   a reception-side baseband processing unit (16);
   a MAC processing unit (20); and
   a transmission-side baseband processing unit (10),

   the reception-side baseband processing unit (16) being configured to:

   acquire transmission line quality information with respect to each of the plurality of counterpart wireless communication devices; and
   notify the acquired transmission line quality information;

   the MAC processing unit (20) being configured to:

   execute, for each of the plurality of counterpart wireless communication devices, first processing for determining a maximum number of assignable transmission streams based on the transmission line quality information notified by the reception-side baseband processing unit (16);
   execute, for each of the plurality of counterpart wireless communication devices, second processing for calculating a diversity order value of the single stream or of each of the plurality of streams through use of the maximum number of transmission streams obtained by the first processing, and comparing the calculated diversity order value of the single stream or of each of the plurality of streams and a diversity order lower limit value set in advance to each other, to thereby determine a number of transmission streams; and
   determine the number of transmission streams obtained by the second processing as a finally-determined number of transmission streams for each of the plurality of counterpart wireless communication devices, and notify the finally-determined number of transmission streams that has been determined; and

   the transmission-side baseband processing unit (10) being configured to transmit the single stream or the respective plurality of streams to the respective counterpart wireless communication devices simultaneously at the same frequency based on the finally-determined numbers of transmission streams for the respective counterpart wireless communication devices, which are notified by the MAC processing unit (20).

2. The wireless communication device according to claim 1, wherein the MAC processing unit (20) is configured to:

   execute, for each of the plurality of counterpart wireless communication devices, third processing for determining a temporary number of transmission streams based on the transmission line quality information notified by the reception-side baseband processing unit (16); and
   compare the number of transmission streams obtained by the second processing and the temporary number of transmission streams obtained by the third processing to each other, and determine a smaller one of the number of transmission streams and the temporary number of transmission streams as the finally-determined number of transmission streams for each of the plurality of counterpart wireless communication devices.

3. The wireless communication device according to claim 1 or 2, wherein the MAC processing unit (20) is configured to:

calculate a reception power of the single stream, reception powers of the respective plurality of streams, or an average reception power, which is an average value of the reception power of the single stream or the reception powers of the respective plurality of streams, as a first determination parameter for each of the plurality of counterpart wireless communication devices based on the transmission line quality information notified by the reception-side baseband processing unit (16); and

determine one of the plurality of counterpart wireless communication devices for which the diversity order lower limit value to be used in the second processing is to be changed based on the first determination parameter calculated for each of the plurality of counterpart wireless communication devices.

4. The wireless communication device according to any one of claims 1 to 3, wherein the MAC processing unit (20) is configured to:

calculate, based on the transmission line quality information notified by the reception-side baseband processing unit (16), an average reception power, which is an average value of a reception power of the single stream or reception powers of the respective plurality of streams, or an average SINR, which is an average value of an SINR of the single stream or SINRs of the respective plurality of streams, as a second determination parameter for each of the plurality of counterpart wireless communication devices; and

determine the single stream or the plurality of streams to be assigned to each of the plurality of counterpart wireless communication devices based on the second determination parameter calculated for each of the plurality of counterpart wireless communication devices.

5. The wireless communication device according to any one of claims 1 to 4, wherein the MAC processing unit (20) is configured to:

calculate, based on the transmission line quality information notified by the reception-side baseband processing unit (16), an SINR of the single stream or SINRs of the respective plurality of streams for each of the plurality of counterpart wireless communication devices; and

compare the SINR of the single stream or the SINRs of the respective plurality of streams calculated for each of the plurality of counterpart wireless communication devices and a set threshold value to each other, cut a surplus transmission power by which the set threshold value is exceeded for one of the plurality of streams having the SINR larger than the set threshold value, and assign the surplus transmission power to another one of the plurality of streams.

6. The wireless communication device according to any one of claims 1 to 4, wherein the MAC processing unit (20) is configured to:

calculate, based on the transmission line quality information notified by the reception-side baseband processing unit (16), an average SINR, which is an average value of an SINR of the single stream or SINRs of the respective plurality of streams for each of the plurality of counterpart wireless communication devices; and

compare the average SINR calculated for each of the plurality of counterpart wireless communication devices and a set threshold value to each other, cut a surplus transmission power by which the set threshold value is exceeded for one of the plurality of counterpart wireless communication devices having the average SINR larger than the set threshold value, and assign the surplus transmission power to another one of the plurality of counterpart wireless communication devices.

7. The wireless communication device according to any one of claims 1 to 6, wherein the transmission-side baseband processing unit (10) is configured to execute non-linear MU-MIMO processing for performing serial interference elimination between user streams.

8. A number-of-transmission-streams determination method, which is executed by a wireless communication device configured to transmit a single stream or a plurality of streams to each of a plurality of counterpart wireless communication devices to be targets, the number-of-transmission-streams determination method comprising the steps of:

executing, for each of the plurality of counterpart wireless communication devices, first processing for determining a maximum number of assignable transmission streams based on the transmission line quality information with respect to each of the plurality of counterpart wireless communication devices;

executing, for each of the plurality of counterpart wireless communication devices, second processing for calculating a diversity order value of the single stream or of each of the plurality of streams through use of the maximum number of transmission streams obtained by the first processing, and comparing the calculated diversity order value of the single stream or of each of the plurality of streams and a diversity order lower limit value set in advance to each other, to thereby determine a number of transmission streams; and

determining the number of transmission streams obtained by the second processing as a finally-determined number of transmission streams for each of the plurality of counterpart wireless communication devices, and notifying the finally-determined number of transmission streams that has been determined.

**Patentansprüche**

1. Drahtlose Kommunikationseinrichtung, die eingerichtet ist, einen einzelnen Datenstrom oder eine Vielzahl von Datenströmen an jede von einer Vielzahl von drahtlosen Gegenstück-Kommunikationseinrichtungen, die Ziele sein sollen, zu übertragen, wobei die drahtlose Kommunikationseinrichtung umfasst:

   eine empfangsseitige Basisbandverarbeitungseinheit (16);
   eine MAC-Verarbeitungseinheit (20); und
   eine übertragungsseitige Basisbandverarbeitungseinheit (10);

   wobei die empfangsseitige Basisbandverarbeitungseinheit (16) eingerichtet ist, um:

   Übertragungsleitungsqualitätsinformationen in Bezug auf jede der Vielzahl von drahtlosen Gegenstück-Kommunikationseinrichtungen zu erwerben; und
   die erworbenen Übertragungsleitungsqualitätsinformation mitzuteilen;

   wobei die MAC-Verarbeitungseinheit (20) eingerichtet ist, um:

   für jede der Vielzahl von drahtlosen Gegenstück-Kommunikationseinrichtungen eine erste Verarbeitung zum Bestimmen einer maximalen Anzahl von zuweisbaren Übertragungsdatenströmen auszuführen auf der Grundlage von den Übertragungsleitungsqualitätsinformationen, die durch die empfangsseitige Basisbandverarbeitungseinheit (16) mitgeteilt wurden;
   für jede der Vielzahl von drahtlosen Gegenstück-Kommunikationseinrichtungen eine zweite Verarbeitung zum Berechnen eines Diversitätsordnungswertes des einzelnen Datenstroms oder jedes der Vielzahl von Datenströmen durch Verwendung der maximalen Anzahl von Übertragungsdatenströmen, die durch die erste Verarbeitung erhalten wurden, auszuführen und den berechneten Diversitätsordnungswert des einzelnen Datenstroms oder jedes der Vielzahl von Datenströmen und einen im Voraus eingestellten unteren Grenzwert der Diversitätsordnung miteinander zu vergleichen, um dadurch eine Anzahl von Übertragungsdatenströmen zu bestimmen; und
   die Anzahl von Übertragungsdatenströmen, die durch die zweite Verarbeitung erhalten wurde, als eine final bestimmte Anzahl von Übertragungsdatenströmen für jede der Vielzahl von drahtlosen Gegenstück-Kommunikationseinrichtungen zu bestimmen und die final bestimmte Anzahl von Übertragungsströmen, die bestimmt wurde, mitzuteilen; und

   wobei die übertragungsseitige Basisbandverarbeitungseinheit (10) eingerichtet ist, den einzelnen Datenstrom oder die jeweilige Vielzahl von Datenströmen an die jeweiligen drahtlosen Gegenstück-Kommunikationseinrichtungen gleichzeitig mit der gleichen Frequenz zu übertragen auf der Grundlage von der final bestimmten Anzahl von Übertragungsdatenströmen für die jeweiligen drahtlosen Gegenstück-Kommunikationseinrichtungen, die durch die MAC-Verarbeitungseinheit (20) mitgeteilt wurden.

2. Drahtlose Kommunikationseinrichtung nach Anspruch 1, wobei die MAC Verarbeitungseinheit (20) eingerichtet ist, um:

   für jede der Vielzahl von drahtlosen Gegenstück-Kommunikationseinrichtungen eine dritte Verarbeitung zum Bestimmen einer temporären Anzahl von Übertragungsdatenströmen auszuführen auf der Grundlage von den Übertragungsleitungsqualitätsinformationen, die durch die empfangsseitige Basisbandverarbeitungseinheit (16) mitgeteilt wurden; und
   die Anzahl von Übertragungsdatenströmen, die durch die zweite Verarbeitung erhalten wurde, und die temporäre Anzahl von Übertragungsdatenströmen, die durch die dritte Verarbeitung erhalten wurde, miteinander zu vergleichen, und eine kleinere von der Anzahl von Übertragungsströmen und der temporären Anzahl von Übertragungsströmen als die final bestimmte Anzahl von Übertragungsströmen für jede der Vielzahl von drahtlosen Gegenstück-Kommunikationseinrichtungen zu bestimmen.

3. Drahtlose Kommunikationseinrichtung nach Anspruch 1 oder 2, wobei die MAC-Verarbeitungseinheit (20) eingerichtet ist, um:

eine Empfangsleistung des einzelnen Datenstroms, Empfangsleistungen der jeweiligen Vielzahl von Datenströmen oder eine durchschnittliche Empfangsleistung, die ein Mittelwert der Empfangsleistung des einzelnen Datenstroms oder der Empfangsleistungen der jeweiligen Vielzahl von Datenströmen ist, zu berechnen als einen ersten Bestimmungsparameter für jede der Vielzahl von drahtlosen Gegenstück-Kommunikationseinrichtungen auf der Grundlage von den durch die empfangsseitige Basisbandverarbeitungseinheit (16) mitgeteilten Übertragungsleitungsqualitätsinformationen; und
eine der Vielzahl von drahtlosen Gegenstück-Kommunikationseinrichtungen, für die der untere Grenzwert der Diversitätsordnung, der bei der zweiten Verarbeitung zu verwenden ist, geändert werden soll, zu bestimmen auf der Grundlage von dem ersten Bestimmungsparameter, der für jede der Vielzahl von drahtlosen Gegenstück-Kommunikationseinrichtungen berechnet wurde.

4. Drahtlose Kommunikationseinrichtung nach einem der Ansprüche 1 bis 3, wobei die MAC-Verarbeitungseinheit (20) eingerichtet ist, um:

auf der Grundlage von den Übertragungsleitungsqualitätsinformationen, die durch die empfangsseitige Basisbandverarbeitungseinheit (16) mitgeteilt wurden, eine durchschnittliche Empfangsleistung, die ein Durchschnittswert einer Empfangsleistung des einzelnen Datenstroms oder Empfangsleistungen der jeweiligen Vielzahl von Datenströmen ist, oder einen durchschnittlichen SINR, der ein Durchschnittswert eines SINR eines einzelnen Datenstroms oder SINRs der jeweiligen Vielzahl von Datenströmen ist, zu berechnen als einen zweiten Bestimmungsparameter für jede der Vielzahl von drahtlosen Gegenstück-Kommunikationseinrichtungen; und
den einzelnen Datenstrom oder die Vielzahl von Datenströmen, die jeder der Vielzahl von drahtlosen Gegenstück-Kommunikationseinrichtungen zuzuweisen sind, zu bestimmen auf der Grundlage von dem zweiten Bestimmungsparameter, der für jede der Vielzahl von drahtlosen Gegenstück-Kommunikationseinrichtungen berechnet wurde.

5. Drahtlose Kommunikationseinrichtung nach einem der Ansprüche 1 bis 4, wobei die MAC-Verarbeitungseinheit (20) eingerichtet ist, um:

auf der Grundlage von den Übertragungsleitungsqualitätsinformationen, die durch die empfangsseitige Basisbandverarbeitungseinheit (16) mitgeteilt wurden, ein SINR des einzelnen Datenstroms oder SINRs der jeweiligen Vielzahl von Datenströmen für jede der Vielzahl von drahtlosen Gegenstück-Kommunikationseinrichtungen zu berechnen; und
das SINR des einzelnen Datenstroms oder die SINRs der jeweiligen Vielzahl von Datenströmen, die für jede der Vielzahl von drahtlosen Gegenstück-Kommunikationseinrichtungen berechnet wurden, und einen eingestellten Schwellenwert miteinander zu vergleichen, eine überschüssige Übertragungsleistung, um die der eingestellte Schwellenwert überschritten ist, für einen der Vielzahl von Datenströmen, aufweisend den SINR größer als den eingestellten Schwellenwert, zu reduzieren und die überschüssige Übertragungsleistung einem anderen der Vielzahl von Datenströmen zuzuweisen.

6. Drahtlose Kommunikationseinrichtung nach einem der Ansprüche 1 bis 4, wobei die MAC-Verarbeitungseinheit (20) eingerichtet ist, um:

auf der Grundlage von den Übertragungsleitungsqualitätsinformationen, die durch die empfangsseitige Basisbandverarbeitungseinheit (16) mitgeteilt wurden, ein durchschnittliches SINR, das ein Durchschnittswert eines SINR des einzelnen Datenstroms oder SINRs der jeweiligen Vielzahl von Datenströmen ist, zu berechnen für jede der Vielzahl von drahtlosen Gegenstück-Kommunikationseinrichtungen; und
das durchschnittliche SINR, das für jede der Vielzahl von drahtlosen Gegenstück-Kommunikationseinrichtungen berechnet wurde, und einen eingestellten Schwellenwert miteinander zu vergleichen, eine überschüssige Übertragungsleistung, um die der eingestellte Schwellenwert überschritten ist, für eine der Vielzahl von drahtlosen Gegenstück-Kommunikationseinrichtungen, aufweisend den durchschnittlichen SINR größer als den eingestellten Schwellenwert, zu reduzieren, und die überschüssige Übertragungsleistung einer anderen der Vielzahl von drahtlosen Gegenstück-Kommunikationseinrichtungen zuzuweisen.

7. Drahtlose Kommunikationseinrichtung nach einem der Ansprüche 1 bis 6, wobei die übertragungsseitige Basisbandverarbeitungseinheit (10) eingerichtet ist, nicht-lineare MU-MIMO-Verarbeitung zum Durchführen von serieller Interferenzeliminierung zwischen Benutzerdatenströmen durchzuführen.

8. Anzahl-von-Übertragungsdatenströme-Bestimmungsverfahren, das durch eine drahtlose Kommunikationseinrichtung ausgeführt wird, die eingerichtet ist, einen einzelnen Datenstrom oder eine Vielzahl von Datenströmen an jede einer Vielzahl von drahtlosen Gegenstück-Kommunikationseinrichtungen, die Ziele sein sollen, zu übertragen, wobei das Anzahl-von-Übertragungsdatenströme-Bestimmungsverfahren die Schritte umfasst:

Ausführen, für jede der Vielzahl von drahtlosen Gegenstück-Kommunikationseinrichtungen, einer ersten Verarbeitung zum Bestimmen einer maximalen Anzahl von zuweisbaren Übertragungsdatenströmen auf der Grundlage von den Übertragungsleitungsqualitätsinformationen in Bezug auf jede der Vielzahl von drahtlosen Gegenstück-Kommunikationseinrichtungen;
Ausführen, für jede der Vielzahl von drahtlosen Gegenstück-Kommunikationseinrichtungen, einer zweiten Verarbeitung zum Berechnen eines Diversitätsordnungswerts des einzelnen Datenstroms oder jedes der Vielzahl von Datenströmen durch Verwendung der maximalen Anzahl von Übertragungsdatenströmen, die durch die erste Verarbeitung erhalten wurde, und miteinander Vergleichen des berechneten Diversitätsordnungswerts des einzelnen Datenstroms oder jedes der Vielzahl von Datenströmen und eines im Voraus eingestellten unteren Grenzwerts einer Diversitätsordnung, um dadurch eine Anzahl von Übertragungsdatenströmen zu bestimmen; und
Bestimmen der Anzahl von Übertragungsdatenströmen, die durch die zweite Verarbeitung erhalten wurde, als eine final bestimmte Anzahl von Übertragungsdatenströmen für jede der Vielzahl von drahtlosen Gegenstück-Kommunikationseinrichtungen, und Mitteilen der final bestimmten Anzahl von Übertragungsdatenströmen, die bestimmt wurde.

## Revendications

1. Dispositif de communication sans fil, qui est configuré pour émettre un seul flux ou une pluralité de flux vers chacun d'une pluralité de dispositifs de communication sans fil homologues pour être des cibles, le dispositif de communication sans fil comprenant :

une unité de traitement en bande de base du côté réception (16) ;
une unité de traitement MAC (20) ; et
une unité de traitement en bande de base du côté émission (10) ;
l'unité de traitement en bande de base du côté réception (16) étant configurée pour :

acquérir des informations de qualité de ligne d'émission en ce qui concerne chacun de la pluralité de dispositifs de communication sans fil homologues ; et
notifier les informations de qualité de ligne d'émission acquises ;

l'unité de traitement MAC (20) étant configurée pour :

exécuter, pour chacun de la pluralité de dispositifs de communication sans fil homologues, un premier traitement visant à déterminer le nombre maximum de flux d'émission attribuables sur la base des informations de qualité de ligne d'émission notifiées par l'unité de traitement en bande de base du côté réception (16) ;
exécuter, pour chacun de la pluralité de dispositifs de communication sans fil homologues, un deuxième traitement visant à calculer une valeur d'ordre de diversité du seul flux ou de chacun de la pluralité de flux en utilisant le nombre maximum de flux d'émission obtenu par le premier traitement, et comparer l'une à l'autre la valeur d'ordre de diversité calculée du seul flux ou de chacun de la pluralité de flux, et une valeur limite inférieure d'ordre de diversité, réglée à l'avance, pour déterminer de ce fait un nombre de flux d'émission ; et
déterminer le nombre de flux d'émission obtenu par le second traitement comme étant un nombre déterminé finalement de flux d'émission pour chacun de la pluralité de dispositifs de communication sans fil homologues, et notifier le nombre déterminé finalement de flux d'émission qui a été déterminé ; et

l'unité de traitement en bande de base du côté émission (10) étant configurée pour émettre le seul flux ou la pluralité respective de flux aux dispositifs de communication sans fil homologues respectifs simultanément à la même fréquence sur la base des nombres déterminés finalement de flux d'émission pour les dispositifs de communication sans fil homologues respectifs, qui sont notifiés par l'unité de traitement MAC (20).

2. Dispositif de communication sans fil selon la revendication 1, où l'unité de traitement MAC (20) est configurée pour :

exécuter, pour chacun de la pluralité de dispositifs de communication sans fil homologues, un troisième traitement visant à déterminer un nombre provisoire de flux d'émission sur la base des informations de qualité de ligne d'émission notifiées par l'unité de traitement en bande de base du côté réception (16) ; et

comparer l'un à l'autre le nombre de flux d'émission obtenu par le deuxième traitement, et le nombre provisoire de flux d'émission obtenu par le troisième traitement, et déterminer le plus petit du nombre de flux d'émission et du nombre provisoire de flux d'émission, comme étant le nombre déterminé finalement de flux d'émission pour chacun de la pluralité de dispositifs de communication sans fil homologues.

3. Dispositif de communication sans fil selon la revendication 1 ou 2, où l'unité de traitement MAC (20) est configurée pour :

calculer une puissance de réception du seul flux, les puissances de réception de la pluralité respective de flux, ou une puissance de réception moyenne, qui est une valeur moyenne de la puissance de réception du seul flux ou des puissances de réception de la pluralité respective de flux, comme étant un premier paramètre de détermination pour chacun de la pluralité de dispositifs de communication sans fil homologues sur la base des informations de qualité de ligne d'émission notifiées par l'unité de traitement en bande de base du côté réception (16) ; et

déterminer l'un de la pluralité de dispositifs de communication sans fil homologues pour lequel la valeur limite inférieure d'ordre de diversité à utiliser dans le deuxième traitement doit être modifiée sur la base du premier paramètre de détermination calculé pour chacun de la pluralité de dispositifs de communication sans fil homologues.

4. Dispositif de communication sans fil selon l'une quelconque des revendications 1 à 3, où l'unité de traitement MAC (20) est configurée pour :

calculer, sur la base des informations de qualité de ligne d'émission notifiées par l'unité de traitement en bande de base du côté réception (16), une puissance de réception moyenne, qui est une valeur moyenne de la puissance de réception d'un seul flux, ou des puissances de réception de la pluralité respective de flux, ou un SINR moyen, qui est une valeur moyenne du SINR du seul flux, ou des SINR de la pluralité respective de flux, comme étant un deuxième paramètre de détermination pour chacun de la pluralité de dispositifs de communication sans fil homologues ; et

déterminer le seul flux ou la pluralité de flux à attribuer à chacun de la pluralité de dispositifs de communication sans fil homologues, sur la base du deuxième paramètre de détermination calculé pour chacun de la pluralité de dispositifs de communication sans fil homologues.

5. Dispositif de communication sans fil selon l'une quelconque des revendications 1 à 4, où l'unité de traitement MAC (20) est configurée pour :

calculer, sur la base des informations de qualité de ligne d'émission notifiées par l'unité de traitement en bande de base du côté réception (16), le SINR du seul flux ou les SINR de la pluralité respective de flux pour chacun de la pluralité de dispositifs de communication sans fil homologues ; et

comparer entre eux le SINR du seul flux ou les SINR de la pluralité respective de flux calculés pour chacun de la pluralité de dispositifs de communication sans fil homologues, et une valeur de seuil fixée, couper la puissance d'émission excédentaire qui fait dépasser la valeur de seuil fixé pour l'un de la pluralité de flux présentant le SINR plus grand que la valeur de seuil fixée, et attribuer la puissance d'émission excédentaire à un autre de la pluralité de flux.

6. Dispositif de communication sans fil selon l'une quelconque des revendications 1 à 4, où l'unité de traitement MAC (20) est configurée pour :

calculer, sur la base des informations de qualité de ligne d'émission notifiées par l'unité de traitement en bande de base du côté réception (16), un SINR moyen, qui est la valeur moyenne du SNIR du seul flux, ou des SINR de la pluralité respective de flux pour chacun de la pluralité de dispositifs de communication sans fil homologues ; et

comparer entre eux le SINR moyen calculé pour chacun de la pluralité de dispositifs de communication sans fil homologues, et une valeur de seuil fixée, couper la puissance d'émission excédentaire qui fait dépasser la valeur de seuil fixé pour l'un de la pluralité de dispositifs de communication sans fil homologues présentant le SINR moyen plus grand que la valeur de seuil fixée, et attribuer la puissance d'émission excédentaire à un autre de la pluralité de dispositifs de communication sans fil homologues.

7. Dispositif de communication sans fil selon l'une quelconque des revendications 1 à 6, où l'unité de traitement en bande de base du côté émission (10) est configurée pour exécuter un traitement MU-MIMO non linéaire pour exécuter une élimination d'interférence série entre les flux d'utilisateur.

8. Procédé de détermination du nombre de flux d'émission, qui est exécuté par un dispositif de communication sans fil configuré pour émettre un seul flux ou une pluralité de flux à chacun d'une pluralité de dispositifs de communication sans fil homologues pour être des cibles, le procédé de détermination du nombre de flux d'émission comprenant les étapes suivantes :

exécuter, pour chacun de la pluralité de dispositifs de communication sans fil homologues, un premier traitement visant à déterminer le nombre maximum de flux d'émission attribuables sur la base des informations de qualité de ligne d'émission en ce qui concerne chacun de la pluralité de dispositifs de communication sans fil homologues ;

exécuter, pour chacun de la pluralité de dispositifs de communication sans fil homologues, un deuxième traitement visant à calculer une valeur d'ordre de diversité du seul flux ou de chacun de la pluralité de flux en utilisant le nombre maximum de flux d'émission obtenu par le premier traitement, et comparer l'une à l'autre la valeur d'ordre de diversité calculée du seul flux ou de chacun de la pluralité de flux, et une valeur limite inférieure d'ordre de diversité, réglée à l'avance, pour déterminer de ce fait un nombre de flux d'émission ; et

déterminer le nombre de flux d'émission obtenu par le second traitement comme étant un nombre déterminé finalement de flux d'émission pour chacun de la pluralité de dispositifs de communication sans fil homologues, et notifier le nombre déterminé finalement de flux d'émission qui a été déterminé.

# FIG. 1

WIRELESS COMMUNICATION SYSTEM

# FIG. 2

# FIG. 3

Start

WAIT UNTIL PROCESSING TIMING — S101

DETERMINE COMBINATION OF USERS — S102

TEMPORARILY DETERMINE NUMBER OF TRANSMISSION STREAMS — S103

CALCULATE DIVERSITY ORDER — S104

DETERMINE NUMBER OF TRANSMISSION STREAMS — S105

PERFORM SETTINGS FOR TRANSMISSION-SIDE BASEBAND PROCESSING UNIT — S106

# FIG. 4

EXAMPLE OF BLOCK DUPLEX
DIAGONALIZATION METHOD
TOTAL NUMBER OF
TRANSMISSION STREAMS:32
NUMBER OF WIRELESS TERMINALS:8
MAXIMUM NUMBER OF
TRANSMISSION STREAMS FOR
EACH WIRELESS TERMINAL:4
DIVERSITY ORDER

| $H_1B_1$ | $O$ | $O$ | $O$ | $O$ | $O$ | $O$ | $O$ |
| $H_2B_1$ | $H_2B_2$ | $O$ | $O$ | $O$ | $O$ | $O$ | $O$ |
| $O$ | $H_3B_2$ | $H_3B_3$ | $O$ | $O$ | $O$ | $O$ | $O$ |
| $O$ | $O$ | $H_4B_3$ | $H_4B_4$ | $O$ | $O$ | $O$ | $O$ |
| $O$ | $O$ | $O$ | $H_5B_4$ | $H_5B_5$ | $O$ | $O$ | $O$ |
| $O$ | $O$ | $O$ | $O$ | $H_6B_5$ | $H_6B_6$ | $O$ | $O$ |
| $O$ | $O$ | $O$ | $O$ | $O$ | $H_7B_6$ | $H_7B_7$ | $O$ |
| $O$ | $O$ | $O$ | $O$ | $O$ | $O$ | $H_8B_7$ | $H_8B_8$ |

| STREAM NUMBER | WIRELESS TERMINAL NUMBER | | | | | | | |
|---|---|---|---|---|---|---|---|---|
| | #1 | #2 | #3 | #4 | #5 | #6 | #7 | #8 |
| Stream#1 | 32 | 32 | 32 | 32 | 32 | 32 | 32 | 16 |
| Stream#2 | 21 | 21 | 21 | 21 | 21 | 21 | 21 | 9 |
| Stream#3 | 12 | 12 | 12 | 12 | 12 | 12 | 12 | 4 |
| Stream#4 | 4 | 4 | 4 | 4 | 4 | 4 | 4 | 1 |

NUMBER OF
ASSIGNED STREAMS ⇩ ⇩ ⇩ ⇩ ⇩ ⇩ ⇩ ⇩

| DIVERSITY ORDER LOWER LIMIT VALUE | WIRELESS TERMINAL NUMBER | | | | | | | |
|---|---|---|---|---|---|---|---|---|
| | #1 | #2 | #3 | #4 | #5 | #6 | #7 | #8 |
| LOWER LIMIT VALUE=4 | 4 | 4 | 4 | 4 | 4 | 4 | 4 | 3 |
| LOWER LIMIT VALUE=10 | 3 | 3 | 3 | 3 | 3 | 3 | 3 | 1 |
| LOWER LIMIT VALUE=20 | 2 | 2 | 2 | 2 | 2 | 2 | 2 | 0 |

# FIG. 5

EXAMPLE OF BLOCK TRIANGULATION METHOD

TOTAL NUMBER OF TRANSMISSION STREAMS:32

NUMBER OF WIRELESS TERMINALS:8

MAXIMUM NUMBER OF TRANSMISSION STREAMS FOR EACH WIRELESS TERMINAL:4

| $H_1B_1$ | $O$ | $O$ | $O$ | $O$ | $O$ | $O$ | $O$ |
|---|---|---|---|---|---|---|---|
| $H_2B_1$ | $H_2B_2$ | $O$ | $O$ | $O$ | $O$ | $O$ | $O$ |
| $H_3B_1$ | $H_3B_2$ | $H_3B_3$ | $O$ | $O$ | $O$ | $O$ | $O$ |
| $H_4B_1$ | $H_4B_2$ | $H_4B_3$ | $H_4B_4$ | $O$ | $O$ | $O$ | $O$ |
| $H_5B_1$ | $H_5B_2$ | $H_5B_3$ | $H_5B_4$ | $H_5B_5$ | $O$ | $O$ | $O$ |
| $H_6B_1$ | $H_6B_2$ | $H_6B_3$ | $H_6B_4$ | $H_6B_5$ | $H_6B_6$ | $O$ | $O$ |
| $H_7B_1$ | $H_7B_2$ | $H_7B_3$ | $H_7B_4$ | $H_7B_5$ | $H_7B_6$ | $H_7B_7$ | $O$ |
| $H_8B_1$ | $H_8B_2$ | $H_8B_3$ | $H_8B_4$ | $H_8B_5$ | $H_8B_6$ | $H_8B_7$ | $H_8B_8$ |

DIVERSITY ORDER

| STREAM NUMBER | WIRELESS TERMINAL NUMBER | | | | | | | |
|---|---|---|---|---|---|---|---|---|
| | #1 | #2 | #3 | #4 | #5 | #6 | #7 | #8 |
| Stream#1 | 128 | 112 | 96 | 80 | 64 | 48 | 32 | 16 |
| Stream#2 | 93 | 81 | 69 | 57 | 45 | 33 | 21 | 9 |
| Stream#3 | 60 | 52 | 44 | 36 | 28 | 20 | 12 | 4 |
| Stream#4 | 29 | 25 | 21 | 17 | 13 | 9 | 4 | 1 |

NUMBER OF ASSIGNED STREAMS ⇩ ⇩ ⇩ ⇩ ⇩ ⇩ ⇩ ⇩

| DIVERSITY ORDER LOWER LIMIT VALUE | WIRELESS TERMINAL NUMBER | | | | | | | |
|---|---|---|---|---|---|---|---|---|
| | #1 | #2 | #3 | #4 | #5 | #6 | #7 | #8 |
| LOWER LIMIT VALUE=4 | 4 | 4 | 4 | 4 | 4 | 4 | 4 | 3 |
| LOWER LIMIT VALUE=10 | 4 | 4 | 4 | 4 | 4 | 3 | 3 | 1 |
| LOWER LIMIT VALUE=20 | 4 | 4 | 4 | 3 | 3 | 3 | 2 | 0 |

# FIG. 6

301 302

| PROCESSOR | MEMORY |
|---|---|

# FIG. 7

EXAMPLE OF BLOCK
TRIANGULATION METHOD
TOTAL NUMBER OF
TRANSMISSION STREAMS:32
NUMBER OF WIRELESS TERMINALS:8
MAXIMUM NUMBER OF
TRANSMISSION STREAMS FOR
EACH WIRELESS TERMINAL:4
DIVERSITY ORDER

| $H_1B_1$ | $O$ | $O$ | $O$ | $O$ | $O$ | $O$ | $O$ |
| $H_2B_1$ | $H_2B_2$ | $O$ | $O$ | $O$ | $O$ | $O$ | $O$ |
| $H_3B_1$ | $H_3B_2$ | $H_3B_3$ | $O$ | $O$ | $O$ | $O$ | $O$ |
| $H_4B_1$ | $H_4B_2$ | $H_4B_3$ | $H_4B_4$ | $O$ | $O$ | $O$ | $O$ |
| $H_5B_1$ | $H_5B_2$ | $H_5B_3$ | $H_5B_4$ | $H_5B_5$ | $O$ | $O$ | $O$ |
| $H_6B_1$ | $H_6B_2$ | $H_6B_3$ | $H_6B_4$ | $H_6B_5$ | $H_6B_6$ | $O$ | $O$ |
| $H_7B_1$ | $H_7B_2$ | $H_7B_3$ | $H_7B_4$ | $H_7B_5$ | $H_7B_6$ | $H_7B_7$ | $O$ |
| $H_8B_1$ | $H_8B_2$ | $H_8B_3$ | $H_8B_4$ | $H_8B_5$ | $H_8B_6$ | $H_8B_7$ | $H_8B_8$ |

| STREAM NUMBER | WIRELESS TERMINAL NUMBER | | | | | | | |
|---|---|---|---|---|---|---|---|---|
| | #1 | #2 | #3 | #4 | #5 | #6 | #7 | #8 |
| Stream#1 | 128 | 112 | 96 | 80 | 64 | 48 | 32 | 16 |
| Stream#2 | 93 | 81 | 69 | 57 | 45 | 33 | 21 | 9 |
| Stream#3 | 60 | 52 | 44 | 36 | 28 | 20 | 12 | 4 |
| Stream#4 | 29 | 25 | 21 | 17 | 13 | 9 | 4 | 1 |

⇧ ⇧ ⇧ ⇧ ⇧ ⇧ ⇧ ⇧

TO BE ASSIGNED      .....      TO BE ASSIGNED
TO CELL EDGE                          TO CELL CENTER
TERMINAL                                 TERMINAL

# FIG. 8

EXAMPLE OF BLOCK
TRIANGULATION METHOD
TOTAL NUMBER OF
TRANSMISSION STREAMS:32
NUMBER OF WIRELESS TERMINALS:8
MAXIMUM NUMBER OF
TRANSMISSION STREAMS FOR
EACH WIRELESS TERMINAL:4
SINR THRESHOLD VALUE:35dB

| $H_1B_1$ | $O$ | $O$ | $O$ | $O$ | $O$ | $O$ | $O$ |
| $H_2B_1$ | $H_2B_2$ | $O$ | $O$ | $O$ | $O$ | $O$ | $O$ |
| $H_3B_1$ | $H_3B_2$ | $H_3B_3$ | $O$ | $O$ | $O$ | $O$ | $O$ |
| $H_4B_1$ | $H_4B_2$ | $H_4B_3$ | $H_4B_4$ | $O$ | $O$ | $O$ | $O$ |
| $H_5B_1$ | $H_5B_2$ | $H_5B_3$ | $H_5B_4$ | $H_5B_5$ | $O$ | $O$ | $O$ |
| $H_6B_1$ | $H_6B_2$ | $H_6B_3$ | $H_6B_4$ | $H_6B_5$ | $H_6B_6$ | $O$ | $O$ |
| $H_7B_1$ | $H_7B_2$ | $H_7B_3$ | $H_7B_4$ | $H_7B_5$ | $H_7B_6$ | $H_7B_7$ | $O$ |
| $H_8B_1$ | $H_8B_2$ | $H_8B_3$ | $H_8B_4$ | $H_8B_5$ | $H_8B_6$ | $H_8B_7$ | $H_8B_8$ |

| | WIRELESS TERMINAL NUMBER | | | | | | | |
| --- | --- | --- | --- | --- | --- | --- | --- | --- |
| | #1 | #2 | #3 | #4 | #5 | #6 | #7 | #8 |
| CALCULATED SINR(dB) | 45 | 40 | 35 | 30 | 25 | 20 | 15 | 5 |
| CONTROL OF POWER BETWEEN TERMINALS (dB) | -10 | -5 | 0 | 0 | 0 | 0 | 0 | +4 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2375584 A
- JP 2012257194 A
- JP 2011199831 A

**Non-patent literature cited in the description**

- **M. RIM.** Multi-user downlink beamforming with multiple transmit and receive antennas. *Electron. Lett.,* December 2002, vol. 38 (25), 1725-1726
- **L.U. CHOI ; R.D. MURCH.** A transmit preprocessing technique for multiuser MIMO systems using a decomposition approach. *IEEE Trans. Wireless Commun.,* January 2004, vol. 3 (1), 20-24
- **NISHIMOTO ; HIRA ; OKAZAKI ; OKAMURA.** Block Multiplexing Diagonalization Method in Multi-user MIMO Downlink. *IEICE Technical Report, RCS 2015-101,* July 2015